(19) Europäisches Patentamt
European Patent Office
Office européen des brevets

(11) Veröffentlichungsnummer: **0 573 762 A2**

# (12) EUROPÄISCHE PATENTANMELDUNG

(21) Anmeldenummer: **93106679.9**

(22) Anmeldetag: **24.04.93**

(51) Int. Cl.5: **C09B 11/24**, C08K 5/00, D06P 3/76, C09D 11/00, B41M 5/38

(30) Priorität: **11.05.92 DE 4215391**
**11.05.92 DE 4215394**

(43) Veröffentlichungstag der Anmeldung:
**15.12.93 Patentblatt 93/50**

(84) Benannte Vertragsstaaten:
**BE CH DE FR GB IT LI**

(71) Anmelder: **BASF Aktiengesellschaft**
**Carl-Bosch-Strasse 38**
**D-67063 Ludwigshafen(DE)**

(72) Erfinder: **Hahn, Erwin, Dr.**
**Am Buechsenackerhang 31**
**W-6900 Heidelberg(DE)**
Erfinder: **Kraeh, Claudia, Dr.**
**Ruchheimer Strasse 1**
**D-67112 Mutterstadt(DE)**
Erfinder: **Mayer, Udo, Dr.**
**Max-Slevogt-Strasse 27**
**W-6710 Frankenthal(DE)**
Erfinder: **Albert, Bernhard, Dr.**
**Rietburgstrasse 13**
**W-6701 Maxdorf(DE)**
Erfinder: **Denziger, Walter**
**Wormser Landstrasse 65**
**W-6720 Speyer(DE)**

(54) **Rhodaminderivate.**

(57) Rhodaminderivate der Formel

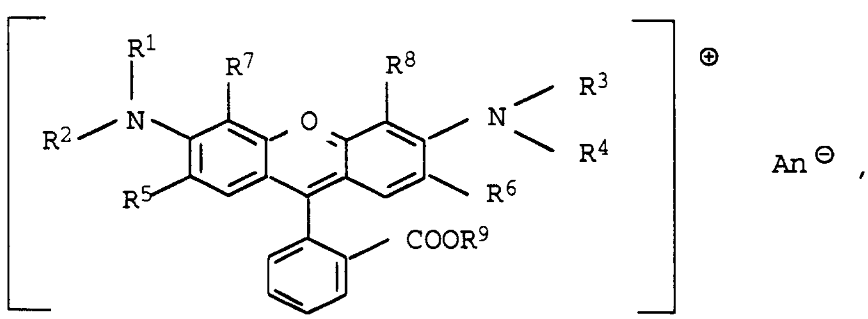

in der

- $R^1$, $R^2$, $R^3$ und $R^4$ Wasserstoff oder gegebenenfalls substituiertes $C_1$-$C_4$-Alkyl oder jeweils $R^2$ und $R^5$ oder $R^4$ und $R^6$ zusammen 1,3-Propylen, das substituiert sein kann,
- $R^5$, $R^6$, $R^7$ und $R^8$ Wasserstoff oder Methyl,
- $R^9$ Wasserstoff, gegebenenfalls substituiertes $C_1$-$C_4$-Alkyl oder einen Rest der Formel $(C_2H_4O-)_nH$, in der n für 2 oder 3 steht, und
- $An^{\ominus}$ das Äquivalent eines Anions, das sich von einem Polymerisat oder Polykondensat ableitet, das jeweils saure Gruppen enthält, bedeuten,

EP 0 573 762 A2

Rank Xerox (UK) Business Services
(3.10/3.6/3.3.1)

neue cyclische Rhodaminfarbstoffe sowie die Verwendung der neuen Rhodaminderivate und cyclischen Rhodaminfarbstoffe zum Färben von Polyacrylnitrilfasern, zur Einarbeitung in Polymere oder zur Herstellung von Tinten.

Die vorliegende Erfindung betrifft neue Rhodaminderivate der Formel I

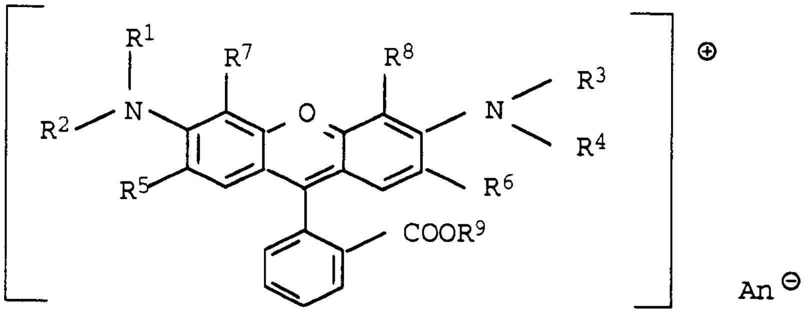

(I),

in der

| | |
|---|---|
| $R^1$, $R^2$, $R^3$ und $R^4$ | gleich oder verschieden sind und unabhängig voneinander jeweils Wasserstoff oder gegebenenfalls substituiertes $C_1$-$C_4$-Alkyl oder jeweils $R^2$ und $R^5$ oder $R^4$ und $R^6$ zusammen 1,3-Propylen, das ein- bis dreifach durch $C_1$-$C_4$-Alkyl substituiert sein kann, |
| $R^5$, $R^6$, $R^7$ und $R^8$ | gleich oder verschieden sind und unabhängig voneinander jeweils Wasserstoff oder Methyl, |
| $R^9$ | Wasserstoff, gegebenenfalls substituiertes $C_1$-$C_4$-Alkyl oder einen Rest der Formel $(C_2H_4O\text{-})_nH$, in der n für 2 oder 3 steht, und |
| $An^\ominus$ | das Äquivalent eines Anions, das sich von einem Polymerisat oder Polykondensat ableitet, das jeweils saure Gruppen enthält, bedeuten, |

neue cyclische Rhodaminfarbstoffe sowie die Verwendung der neuen Rhodaminderivate und cyclischen Rhodaminfarbstoffe zum Färben von Polyacrylnitrilfasern, zur Einarbeitung in Polymeren oder zur Herstellung von Tinten.

Rhodaminfarbstoffe sind an sich bekannt und gehören zur Klasse der Xanthenfarbstoffe. Beispielhaft seien C.I Basic Red 1(45 160), C.I. Basic Violet 10 (45 170) oder C.I. Basic Violet 11 (45 175) genannt.

Die bekannten Rhodaminfarbstoffe zeichnen sich durch eine brillante Eigenfarbe aus. Drucke oder Färbungen mit diesen Rhodaminfarbstoffen weisen jedoch in der Regel eine sehr geringe Lichtechtheit auf und verlieren ihre Brillanz durch Abtrübung oder durch Verminderung der Fluoreszenz.

Die EP-A-463 260 beschreibt organische Pigmente, die eine thermoplastische Polymermatrix auf Polyamidbasis, die praktisch neutral ist, und einen Fluoreszenzfarbstoff, der auch aus der Reihe der Rhodamine stammen kann, aufweisen.

Aufgabe der vorliegenden Erfindung war es nun, neue Rhodaminderivate bereitzustellen, die die Nachteile der bekannten Rhodaminfarbstoffe nicht mehr oder nur noch in geringem Maß aufweisen.

Demgemäß wurden die eingangs erwähnten Rhodaminderivate der Formel I gefunden.

Alle in der obengenannten Formel I auftretenden Alkylgruppen können sowohl geradkettig als auch verzweigt sein.

Wenn in der obengenannten Formel I substituierte Alkylgruppen auftreten, so können als Substituenten z. B. Hydroxy, $C_1$-$C_4$-Alkoxy, Cyano oder Phenyl in Betracht kommen.

Reste $R^1$, $R^2$, $R^3$, $R^4$ und $R^9$ sind z. B. Methyl, Ethyl, Propyl, Isopropyl, Butyl, Isobutyl, sec-Butyl, 2-Hydroxyethyl, 2- oder 3-Hydroxypropyl, 2- oder 4-Hydrorybutyl, 2-Methoxyethyl, 2- oder 3-Methoxypropyl, 2- oder 4-Methoxybutyl, 2-Ethoxyethyl, 2- oder 3-Ethoxyropyl, 2- oder 4-Ethorxybutyl, 2-Cyanoethyl, 2- oder 3-Cyanopropyl, 2- oder 4-Cyanobutyl, Benzyl oder 1- oder 2-Phenylethyl.

Reste $R^9$ sind weiterhin z. B. 5-Hydroxy-3-oxapentyl oder 8-Hydroxy-3,6-dioxaoctyl.

Die Reste $R^2$ und $R^5$ oder $R^4$ und $R^6$ können jeweils zusammen auch 1,3-Propylen bedeuten, das ein- bis dreifach durch $C_1$-$C_4$-Alkyl, insbesondere Methyl, substituiert sein kann. In diesem Falle können z. B. folgende Reste in Betracht kommen: $-CH_2-CH_2-CH_2-$, $-CH(CH_3)-CH_2-CH_2-$, $-CH(CH_3)-CH_2-CH(CH_3)-$ oder $-C(CH_3)_2-CH_2-CH(CH_3)-$, wobei der letztgenannte Rest vorzugsweise so eingebaut ist, daß das tertiäre Kohlenstoffatom dem Stickstoffatom benachbart ist.

$An^\ominus$ ist das Äquivalent eines Anions, das sich von einem Polymerisat oder Polykondensat ableitet, das jeweils saure Gruppen enthält.

Unter sauren Gruppen in erfindungsgemäßem Sinn ist insbesondere die Carboxylat- oder Hydroxysulfonatgruppe zu verstehen.

Anionische Polymerisate können entweder Homopolymerisate oder Copolymerisate sein.

Geeignete Monomere, die saure Gruppen aufweisen und die den anionischen Polymerisaten zugrundeliegen sind z. B. Acrylsäure, Methacrylsäure, Maleinsäure, Fumarsäure, die Halbester aus Maleinsäure oder Fumarsäure mit niederen Alkoholen, insbesondere $C_1$-$C_4$-Alkanolen, N-(1-Hydroxysulfonyl-2-methylprop-2-yl)acrylamid, N-(1-Hydroxysulfonyl-2-methylprop-2-yl)methacrylamid oder 3-Hydroxysulfonyl-2-methylprop-1-en.

Geeignete Comonomere sind z. B. Acrylamid, Methacrylamid, N-Hydroxymethylacrylamid, 3-Hydroxypropylacrylat, 3-Hydroxypropylmethacrylat, Vinylacetat, N-Vinylformamid, Maleinsäureanhydrid oder Methylvinylether.

Die Homo- oder Copolymerisate weisen in der Regel ein mittleres Molekulargewicht von 500 bis 300 000, vorzugsweise 1 000 bis 100 000, auf.

Wenn $An^{\ominus}$ sind von einem Copolymerisat ableitet, so weist dies im allgemeinen einen Anteil von 20 bis 99 Gew.-%, vorzugsweise 50 bis 95 Gew.-%, an Monomeren mit sauren Gruppen und einem Anteil von 1 bis 80 Gew.-%, vorzugsweise 5 bis 50 Gew.-%, an Comonomeren, jeweils bezogen auf das Gewicht des Polymerisats, auf.

Geeignete Polykondensate, die saure Gruppen aufweisen, sind beispielsweise Polykondensate auf Basis von Formaldehyd und Napthalinsulfonsäuren, Formaldehyd und Naphthalin- und Methylnaphthalinsulfonsäurenoder Formaldehyd und Phenolsulfonsäuren. Das Molverhältnis Formaldehyd: Aromat liegt dabei in der Regel bei 1 : 2 bis 2 : 1.

Die Polykondensate weisen in der Regel ein mittleres Molekulargewicht von 500 bis 300 000, vorzugsweise 800 bis 70 000, auf.

In Abhängigkeit vom Molekulargewicht weisen die Anionen auf Polymerisat- oder Polykondensatbasis in der Regel 10 bis 2 000 saure Gruppen im Molekül auf. Dabei stellt in der Regel das Rhodaminkation nicht das einzige Gegenion dar. Vielmehr können als weitere Gegenionen z. B. noch Protonen oder Natrium- oder Kaliumionen zugegen sein, wobei Protonen hervorzuheben sind.

Im allgemeinen weisen ca. 0,1 bis 80 % der sauren Gruppen im Anion auf Polymerisat- oder Polykondensatbasis das Rhodaminkation als Gegenion auf.

Bevorzugt sind Rhodaminderivate der Formel I, in der $R^1$, $R^2$, $R^3$, $R^4$ und $R^9$ unabhängig voneinander Wasserstoff oder $C_1$-$C_4$-Alkyl bedeuten.

Weiterhin bevorzugt sind Rhodaminderivate der Formel Ia

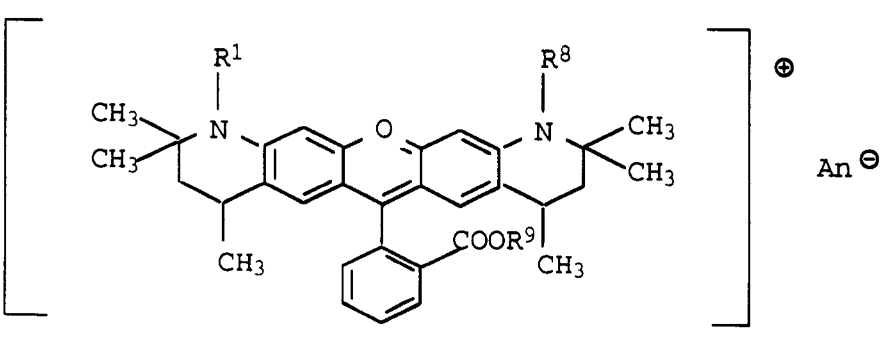

(Ia),

in der $R^1$, $R^8$ und $R^9$ unabhängig voneinander jeweils Wasserstoff oder $C_1$-$C_4$-Alkyl, dabei insbesondere Methyl oder Ethyl, bedeuten und $An^{\ominus}$ die obengenannte Bedeutung besitzt.

Die neuen Rhodaminderivate der Formel I werden vorteilhaft erhalten, wenn man die neutrale Farbstoffbase, die in der Lactonform oder in einer chinoiden Form vorliegen kann oder die der Formel III

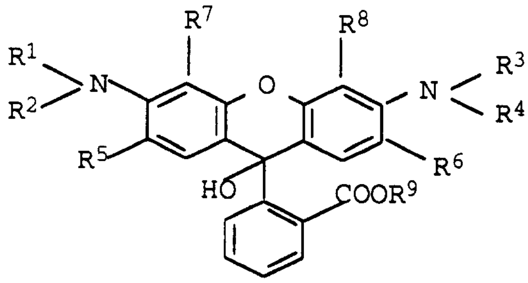

(III)

gehorcht, in der $R^1$, $R^2$, $R^3$, $R^4$, $R^5$, $R^6$, $R^7$, $R^8$ und $R^9$ jeweils die obengenannte Bedeutung besitzen, in einem geeigneten Lösungsmittel, z. B. Wasser, niedere Alkohole, wie Methanol, Ethanol, Propanol oder Isopropanol, oder Gemische dieser Lösungsmittel, löst und mit saure Gruppen aufweisendem Polymerisat oder Polykondensat versetzt. Dabei ist es vorteilhaft, einen Überschuß an Polymerisat oder Polykondensat zu verwenden. Bezogen auf 1 mol Rhodaminfarbstoff wendet man in der Regel 1 bis 500, vorzugsweise 4 bis 300 Moläquivalent, Polymerisat oder Polykondensat an. Nach einer Nachrührphase von 0,25 bis 24 Stunden bei einer Temperatur von 10 bis 50 °C sind die neuen Rhodaminderivate der Formel I gebildet und können in dieser Form oder gegebenenfalls nach Entfernen des Lösungsmittels ihrer Anwendung zugeführt werden.

Die erfindungsgemäßen Rhodaminderivate eignen sich in vorteilhafter Weise zum Färben von Polyacrylnitrilfasern, zur Einarbeitung in Polymeren oder zur Herstellung von Tinten. Weiterhin können sie bei der Herstellung von Tonern für die Elektrophotographie oder bei der Herstellung von Fluoressenzpigmenten zur Anwendung kommen.

Sie zeichnen sich durch eine verbesserte Lichtechtheit gegenüber herkömmlichen Rhodaminen aus.

Die vorliegende Erfindung betrifft weiterhin neue Rhodaminfarbstoffe der Formel II

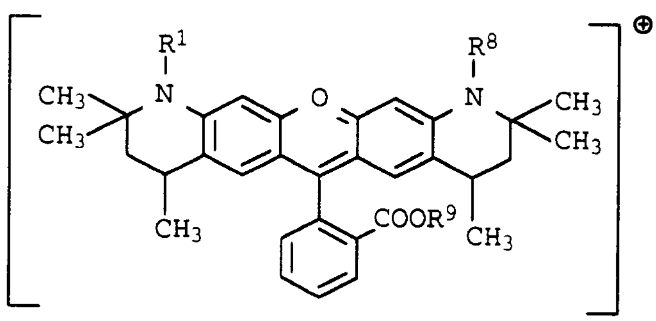

(II),

in der

$R^1$, $R^8$ und $R^9$ gleich oder verschieden sind und unabhängig voneinander jeweils Wasserstoff oder gegebenenfalls substituiertes $C_1$-$C_4$-Alkyl und

$X^{\ominus}$ das Äquivalent eines Anions bedeuten,

sowie deren Verwendung zum Färben von Polyacrylnitrilfasern, zur Einarbeitung in Polymeren oder zur Herstellung von Tinten.

Aus der US-Patentanmeldung Serial No. 566 924 (29.12.83) sind Farbstoffe mit ähnlicher Struktur bekannt, wobei jedoch die Kohlenstoffatome der beiden äußeren stickstoffhaltigen Ringe keine weiteren Substituenten tragen.

Aufgabe der vorliegenden Erfindung war es weiterhin, neue Rhodaminfarbstoffe bereitzustellen, die sich durch vorteilhafte Gebrauchseigenschaften, insbesondere eine hohe Lichtechtheit auszeichnen.

Demgemäß wurden die oben näher bezeichneten Rhodaminfarbstoffe der Formel II gefunden.

Für die Reste $R^1$, $R^8$ und $R^9$ sei auf die oben gemachten beispielhaften Aufzählungen verwiesen.

Geeignete Anionen, von denen sich $X^{\ominus}$ als Äquivalent eines Anions ableitet, sind anorganische oder organische Anionen, z.B. Fluorid, Chlorid, Bromid, Iodid, Hydrogensulfat, Sulfat, Tetrafluoroborat, Formiat, Acetat, Propionat, Mono-, Di- oder Trichloracetat, Lactat, Methoxyacetat, Citrat, Succinat, Methylsulfonat, Benzolsulfonat oder 2- oder 4-Methylbenzolsulfonat.

Bevorzugt sind Rhodaminfarbstoffe der Formel II, in der $R^1$, $R^8$ und $R^9$ unabhängig voneinander jeweils Wasserstoff oder $C_1$-$C_4$-Alkyl bedeuten.

Besonders bevorzugt sind Rhodaminfarbstoffe der Formel I, in der $R^1$ und $R^8$ jeweils Wasserstoff und $R^9$ $C_1$-$C_4$-Alkyl, dabei insbesondere Methyl oder Ethyl, bedeuten.

Die erfindungsgemäßen Rhodaminfarbstoffe der Formel II können auf an sich bekanntem Wege hergestellt werden. Beispielsweise kann ein Anilinderivat der Formel IV

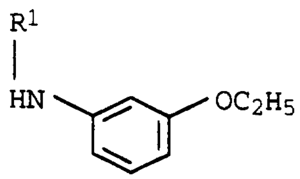
(IV),

in der $R^1$ die obengenannte Bedeutung besitzt, durch Umsetzung mit Aceton in ein Dihydrochinolin der Formel V

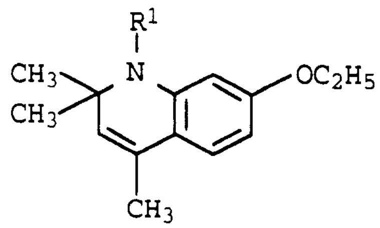
(V),

in der $R^1$ die obengenannte Bedeutung besitzt, übergeführt werden, aus dem nach Hydrierung und Behandlung mit Bromwasserstoff in Eisessig das Hydroxytetrahydrochinolin der Formel VI

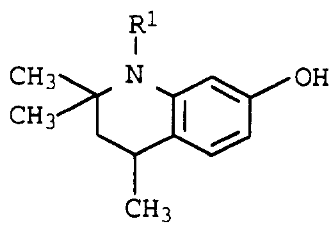
(VI),

in der $R^1$ die obengenannte Bedeutung besitzt, erhalten wird. Durch Umsetzung des Hydroxytetrahydrochinolins IV beispielsweise mit Phthalsäureanhydrid gelangt man dann zu den Rhodaminfarbstoffen der Formel II.

Diese Herstellmethode ist beispielsweise aus J. Org. Chem., Band 30, Seiten 1832 bis 1837, 1965, der SU-A-548 603 und der obengenannten US-Patentanmeldung bekannt.

Die neuen Rhodaminfarbstoffe der Formel II sind wertvolle Zwischenprodukte zur Herstellung der eingangs näher bezeichneten Rhodaminderivate. Außerdem eignen sie sich zum Färben von Polyacrylnitrilfasern, zur Einarbeitung in Polymeren oder zur Herstellung von Tinten. Weiterhin können sie als Laserfarbstoffe oder bei der Herstellung von Tonern für die Elektrophotographie zur Anwendung kommen.

Die folgenden Beispiele sollen die Erfindung näher erläutern.

A) Allgemeine Herstell- und Meßvorschrift

Eine Lösung von 1,0 g neutraler Farbstoffbase in 300 ml Wasser wird mit 50,0 g eines anionischen Polymerisats oder Polykondensats versetzt und 12 Stunden bei 20 °C gerührt.

Das resultierende Reaktionsgemisch wird mit einer Drahtrakel auf einen Glasträger aufgetragen. Es wird dann in einem Spektrometer die Absorption gemessen, wobei die Dicke des Films so gewählt wird, daß im Absorptionsmaximum der Filme eine Transmission von 10 bis 25 % erhalten wird.

Diese Schichten werden in einem Sun-Tester der Fa. Hanau mit einer 1500 Watt-Xenonampe belichtet. Nach bestimmter Zeitabständen wird die Zunahme der Transmission spektrometrisch erfaßt.

Innerhalb eines nicht zu großen Intervalls der Transmissionszunahme (z. B. von ca. 15 % auf ca. 40 %) wird die Steigung der Ausgleichsgerade durch die Meßpunkte bestimmt, der erhaltene Zahlenwert ist das Maß für die Lichtechtheit.

Der in Tabelle 3 angegebene Zahlenwert hat die Dimension: Transmissionszunahme in Prozent je Stunde Belichtungsdauer.

Folgende neutrale Farbstoffbasen wurden verwendet.

Tabelle 1

| Verbindung Nr. | |
|---|---|
| 1 | 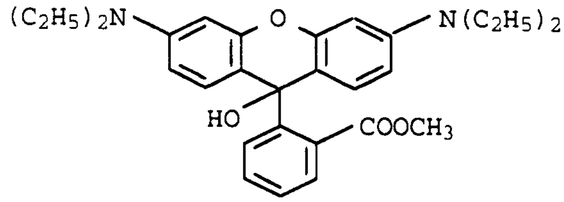 |
| 2 | 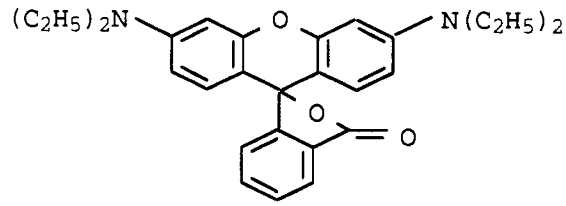 |
| 3 | 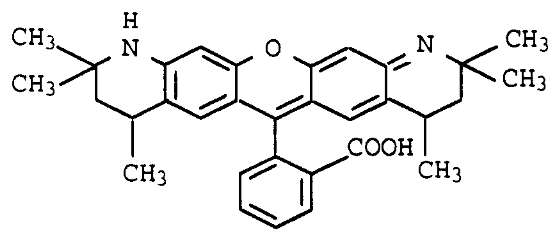 |
| 4 | 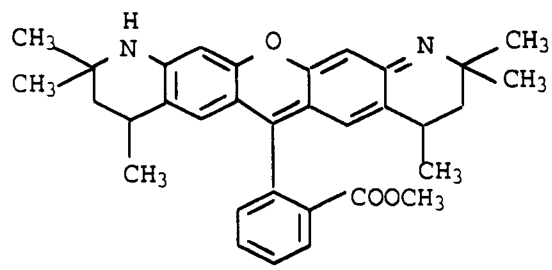 |
| 5 | 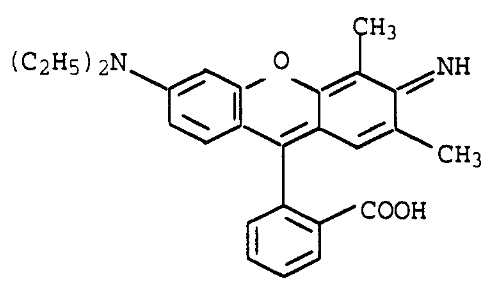 |

Folgende Polymerisate/Polykondensate wurden verwendet.

Tabelle 2

| Nr. | Polymerisat/Polykondensat | Mittleres Molekulargewicht |
|---|---|---|
| 1 | Naphthalinsulfonsäure-Formaldehyd-Kondensat | |
| 2 | Polyacrylsäure | 4.000 |
| 3 | Maleinsäure-Acrylsäure-Copolymerisat | 3.000 |
| 4 | Polyacrylsäure | 20.000 |
| 5 | Polyacrylsäure | 100.000 |
| 6 | Polyacrylsäure | 250.000 |
| 7 | Copolymerisat aus Maleinsäure und 3-Hydroxypropylacrylat | 1.200 |
| 8 | Copolymerisat aus Acrylsäure und 3-Hydroxysulfonyl-2-methylprop-1-en | |
| 9 | Copolymerisat aus Acrylsäure und N-(1-Hydroxysulfonyl-2-methylprop-2-yl)acrylamid | |
| 10 | Polyacrylsäure, schwach vernetzt | |
| 11 | Copolymerisat aus Maleinsäure und Vinylmethylether | |
| 12 | Rohnaphthalinsulfonsäure-Formaldehydkondensat | |

In der folgenden Tabelle 3 sind die nach der obengenannten Methode gemessenen Lichtechtheitswerte der neuen Rhodaminderivate aufgeführt.

Tabelle 3

| Bsp.-Nr. | Zugrundeliegende Farbstoffbase (Tab. 1) | Polymerisat/ Polykondensat (Tab. 2) | Lichtechtheit |
|---|---|---|---|
| 1 | 1 | 1 | 0,57 |
| 2 | 1 | 2 | 0,94 |
| 3 | 1 | 3 | 1,25 |
| 4 | 1 | 4 | 2,69 |
| 5 | 1 | 5 | 1,56 |
| 6 | 1 | 6 | 1,41 |
| 7 | 1 | 7 | 2,42 |
| 8 | 1 | 8 | 0,93 |
| 9 | 1 | 9 | 1,04 |
| 10 | 1 | 10 | 1,25 |
| 11 | 1 | 11 | 1,44 |
| 12 | 2 | 8 | 1,20 |
| 13 | 5 | 2 | 1,33 |
| 14 | 3 | 2 | 0,32 |
| 15 | 4 | 2 | 0,20 |

In Tabelle 4 sind zum Vergleich die Lichtechtheitswerte von Rhodaminfarbstoffen mit üblichen Gegenionen oder der entsprechenden neutralen Farbstoffbase aufgeführt.

Tabelle 4

| Bsp.-Nr. | Zugrundeliegende Farbstoffbase (Tab. 1) | Anion | Lichtechtheit |
|---|---|---|---|
| 16 | 1 | $ZnCl_3^{\ominus}$ | 46,96 |
| 17 | 2 | $Cl^{\ominus}$ | 96,01 |
| 18 | 3 | $CH_3COO^{\ominus}$ | 33,82 |
| 19 | 4 | $CH_3OSO_3^{\ominus}$ | 12,00 |
| 20 | 5 | - | 21,80 |

B) Herstellung der cyclischen Rhodaminfarbstoffe

Beispiel 21

28 g 2,2,4-Trimethyl-7-hydroxytetrahydrochinolin und 17 g Phthalsäureanhydrid wurden mit 8,5 g Zinkchlorid vermischt. Die Mischung wurde auf 165 °C erhitzt und 5 Stunden bei dieser Temperatur gehalten. Das beim Abkühlen erstarrende Reaktionsgemisch wurde pulverisiert und in 100 ml Wasser eingetragen. Nachdem man mit Natronlauge einen pH-Wert von 8 bis 9 eingestellt hatte, wurde der kristalline Niederschlag abgesaugt und mit Wasser gewaschen. Um Restmengen an Zink zu entfernen, wurde das Filtergut in 15 ml 25 gew.-%ige wäßrige Ammoniaklösung eingetragen. Man rührte 1 Stunde bei Raumtemperatur, saugte das kristalline Produkt ab und wusch es mit Wasser nach. Nach dem Trocknen bei 60 °C wurden 25 g Farbbase erhalten, die in Wasser eingetragen und mit Essigsäure versetzt wurden. Nach dem Absaugen und Trocknen erhielt man den Farbstoff der Formel

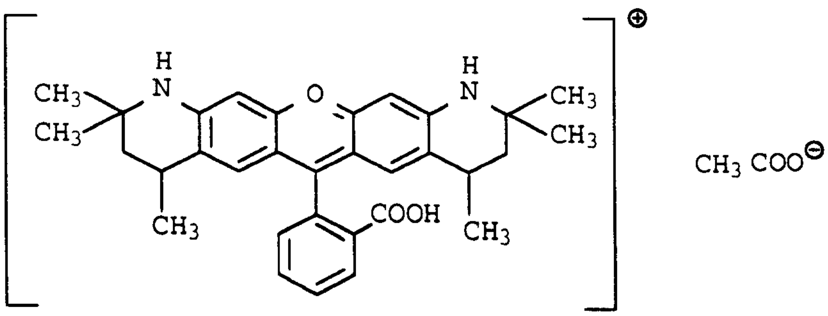

Beispiel 22

25 g Farbstoff aus Beispiel 1 wurden zusammen mit 4 g Magnesiumoxid in 100 ml γ-Butyrolacton eingetragen. Das Gemisch wurde mit 13 g Dimethylsulfat versetzt und zunächst auf 100 °C erwärmt. Nach 5 Stunden wurde die Temperatur auf 130 °C erhöht und noch 3 Stunden bei diesem Wert gehalten. Nach dem Abkühlen auf Raumtemperatur wurde das Gemisch in 500 ml Wasser aufgenommen. Der kristalline Niederschlag wurde abgesaugt und mit Wasser gewaschen. Nach dem Trocknen bei 60 °C wurden 28 g Farbstoff der Formel

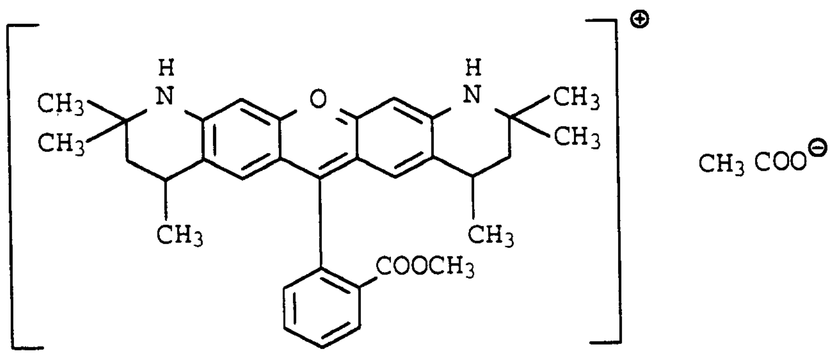

erhalten.

Analog Beispiel 21 und 22 können folgende Farbstoffe der Formel

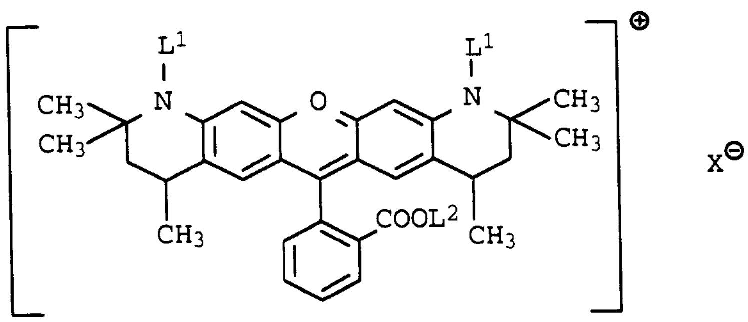

erhalten werden. Der Austausch des Anions ist nach den üblichen Verfahren möglich.

| Beispiel Nr. | $L^1$ | $L^2$ | $X^{\ominus}$ |
|---|---|---|---|
| 3 | H | $CH_3$ | $Cl^{\ominus}$ |
| 4 | H | $CH_3$ | $BF_4^{\ominus}$ |
| 5 | H | $C_2H_5$ | $Cl^{\ominus}$ |
| 6 | $CH_3$ | H | $Cl^{\ominus}$ |
| 7 | $CH_3$ | $CH_3$ | $CH_3OSO_3^{\ominus}$ |
| 8 | $C_2H_5$ | H | $Cl^{\ominus}$ |
| 9 | $C_2H_5$ | $CH_3$ | $Cl^{\ominus}$ |

## Patentansprüche

**1.** Rhodaminderivate der Formel I

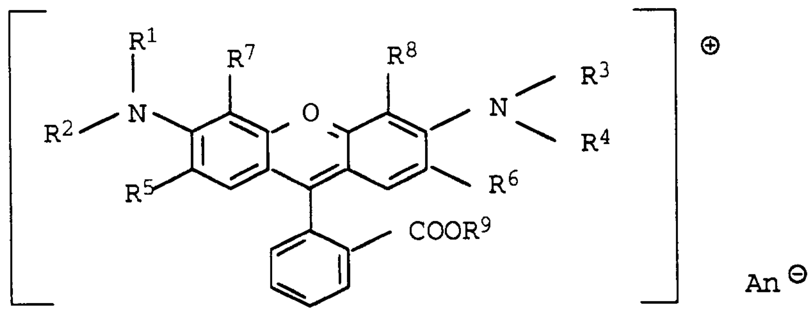

(I),

in der

$R^1$, $R^2$, $R^3$ und $R^4$ gleich oder verschieden sind und unabhängig voneinander jeweils Wasserstoff oder gegebenenfalls sübstituiertes $C_1$-$C_4$-Alkyl oder jeweils $R^2$ und $R^5$ oder $R^4$ und $R^6$ zusammen 1,3-Propylen, das ein- bis dreifach durch $C_1$-$C_4$-Alkyl substituiert sein kann,

$R^5$, $R^6$, $R^7$ und $R^8$ gleich oder verschieden sind und unabhängig voneinander jeweils Wasserstoff oder Methyl,

$R^9$ Wasserstoff, gegebenenfalls substituiertes $C_1$-$C_4$-Alkyl oder einen Rest der Formel $(C_2H_4O\text{-})_nH$, in der n für 2 oder 3 steht, und

$An^{\ominus}$ das Äquivalent eines Anions, das sich von einem Polymerisat oder Polykondensat ableitet, das jeweils saure Gruppen enthält, bedeuten.

**2.** Rhodaminderivate nach Anspruch 1, dadurch gekennzeichnet, daß die sauren Gruppen im Anion Carboxylat- oder Hydroxysulfonatgruppen sind.

**3.** Rhodaminderivate nach Anspruch 1, dadurch gekennzeichnet, daß das mittlere Molekulargewicht des Anions, das sich von einem Polymerisat oder Polykondensat ableitet, 500 bis 300 000 beträgt.

**4.** Rhodaminderivate nach Anspruch 1, dadurch gekennzeichnet, daß $An^{\ominus}$ das Äquivalent eines Anions bedeutet, das sich von einem Homo- oder Copolymerisat ableitet.

**5.** Rhodaminderivate nach Anspruch 1, dadurch gekennzeichnet, daß $R^1$, $R^2$, $R^3$, $R^4$ und $R^9$ unabhängig voneinander jeweils Wasserstoff oder $C_1$-$C_4$-Alkyl bedeuten.

**6.** Rhodaminderivate nach Anspruch 1, die der Formel Ia

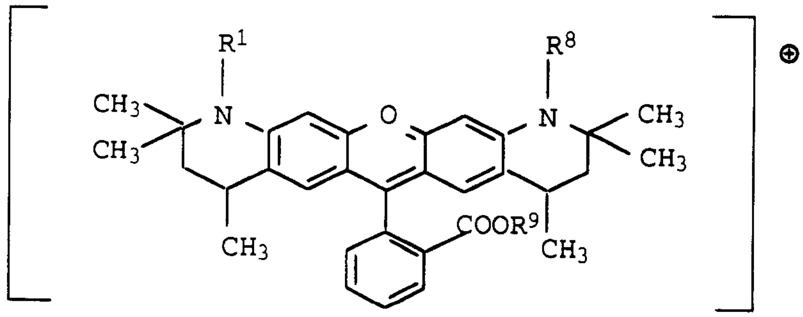

An$^{\ominus}$ (Ia)

gehorchen, in der $R^1$, $R^8$ und $R^9$ unabhängig voneinander jeweils Wasserstoff oder $C_1$-$C_4$-Alkyl bedeuten und An$^{\ominus}$ die in Anspruch 1 genannte Bedeutung besitzt.

7. Verwendung der Rhodaminderivate gemäß Anspruch 1 zum Färben von Polyacrylnitrilfasern, zur Einarbeitung in Polymeren oder zur Herstellung von Tinten.

8. Rhodaminfarbstoffe der Formel II

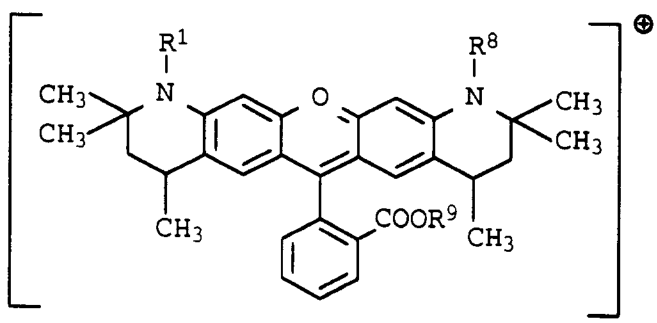

X$^{\ominus}$ (I),

in der

| | |
|---|---|
| $R^1$ $R^8$ und $R^9$ | gleich oder verschieden sind und unabhängig voneinander jeweils Wasserstoff oder gegebenenfalls sübstituiertes $C_1$-$C_4$-Alkyl und |
| X$^{\ominus}$ | das Äquivalent eines Anions bedeuten. |

9. Rhodaminfarbstoffe nach Anspruch 8, dadurch gekennzeichnet, daß $R^1$, $R^8$ und $R^9$ unabhängig voneinander jeweils Wasserstoff oder $C_1$-$C_4$-Alkyl bedeuten.

10. Verwendung der Rhodaminfarbstoffe der Formel II gemäß Anspruch 8 zum Färben von Polyacrylnitrilfasern, zur Einarbeitung in Polymeren oder zur Herstellung von Tinten.